# EUROPEAN PATENT APPLICATION

(11) **EP 4 851 232 A1**
(43) Date of publication of application: **09.12.2026**
(21) Application number: 25749090.4
(22) Date of filing: 15.01.2025
(51) Int. Cl.: C08J 5/18, B29C 55/02, C08G 63/16

(54) **HEAT-SHRINKABLE POLYESTER FILM AND MANUFACTURING METHOD THEREFOR**

(30) Priority: 29.01.2024 KR 20240013509; 21.11.2024 KR 20240167175
(71) Applicant: SK Chemicals Co., Ltd., Seongnam-si, Gyeonggi-do 13494 (KR)
(72) Inventor: HWANG, Da-Young, Seongnam-si, Gyeonggi-do 13494 (KR); KIM, Sangwoo, Seongnam-si, Gyeonggi-do 13494 (KR); EOM, Jiyeon, Seongnam-si, Gyeonggi-do 13494 (KR); LEE, Boo-Youn, Seongnam-si, Gyeonggi-do 13494 (KR)
(74) Representative: Dehns
(86) International application number: PCT/KR2025/000855
(87) International publication number: WO 2025/165003

(57) **Abstract**

The present invention relates to a heat-shrinkable polyester film and a manufacturing method therefor, wherein the polyester film has excellent heat resistance, transparency, etc. and has crystallinity required in molding processes and/or recycling processes, thereby exhibiting improved moldability and recyclability.

## Description

### Technical Field

The present invention relates to a polyester film having excellent thermal resistance and recyclability while ensuring heat shrinkability and to a process for preparing the polyester film.

### Background Art

As the severity of environmental problems increases, technologies for recycling waste plastic containers (e.g., waste PET bottles) indiscriminately discarded are attracting attention. The process of recycling waste plastic containers may be divided into a physical recycling process through washing and crushing and a chemical recycling process through a depolymerization process.

Here, the recyclability of waste plastic containers is reduced due to packaging materials and/or labels combined with the waste plastic containers. Specifically, plastic containers are combined with a heat-shrinkable polyester film as a packaging material and/or a label. Due to the difference in crystallinity between a polyester film and plastic containers, recycling of waste plastic containers requires separating (removing) the polyester film from the waste plastic containers, which lowers the recyclability of waste plastic containers. In addition, polyester films used in a heat shrinkage process are manufactured to have low crystallinity by blending a soft component into the polyester resin, making it difficult to improve recyclability, which has been highlighted due to the waste plastic problems.

Meanwhile, the recycling process comprises a washing step in which polyester films are washed in high-temperature water. When polyester films are put into the washing step, there arises also a problem in that it is difficult to determine whether the polyester films have been removed: for, the increase in haze with respect to temperature is minimal.

In addition, conventionally, polymer films (e.g., polyethylene films or polypropylene films) having a density that makes them float on water have been applied as packaging materials and/or labels, so that the flakes of the polymer films are washed and sorted in the washing step. Here, they are not the same material as the plastic containers made of a PET material but a different material. Thus, if washing and sorting are not performed properly, whereby they are entrained into the recycling process of the plastic containers, they act as a source of contamination (impurity), which also reduces recyclability.

Accordingly, there is a need for a polymer film that is the same material as plastic containers made of a PET material while it can be readily removed during the washing step.

### Disclosure of Invention

### Technical Problem

The present inventors have conducted various studies in order to solve the above-mentioned problems in the art. As a result, it has been discovered that a polyester film having optimized crystallinity and exhibiting properties required in the field of heat-shrinkable films (e.g., heat shrinkability, thermal resistance, transparency, processability, and the like), while enhancing the recyclability of plastic containers, is obtained by controlling the change in haze at a specific temperature.

Accordingly, an object of the present invention is to provide a polyester film with a controlled change in haze at a specific temperature and a process for preparing the same. Specifically, an object of the present invention is to provide a polyester film, in which its haze is increased at a specific temperature, whereby flakes (e.g., flakes obtained by crushing PET bottles to which the polyester film has been combined) can be readily removed during the washing and sorting steps thereof, thereby enhancing recyclability, and a process for preparing the same.

### Solution to Problem

In order to accomplish the above object, the present invention provides a polyester film, which comprises a polyester resin comprising a diol repeat unit derived from a diol component; and a dicarboxylic acid repeat unit derived from a dicarboxylic acid component, wherein the heat shrinkage rate in the main shrinkage direction at 85°C is 50% or more, and when T1 is 80°C and T2 is 85°C, the average change in haze (ΔHₐᵥₑ) according to the following Equation 1 is 0.5 to 10: [Equation 1] ${ΔH}_{ave} \left(%/°C\right) = \left|{H}_{T 2}-{H}_{T 1}\right| / \left|T2-T1\right|$ in Equation 1, H_{T1} is the haze (%) of the polyester film at the temperature of T1, and H_{T2} is the haze (%) of the polyester film at the temperature of T2.

In addition, the present invention provides a process for preparing a polyester film, which comprises (1) polymerizing a diol component and a dicarboxylic acid component to prepare a polyester resin; (2) preparing a stretched film from the polyester resin; and (3) heat-setting the stretched film, wherein the heat shrinkage rate of the polyester film in the main shrinkage direction at 85°C is 50% or more, and when T1 is 80°C and T2 is 85°C, the average change in haze (ΔHₐᵥₑ) according to the above Equation 1 is 0.5 to 10.

### Advantageous Effects of Invention

The polyester film according to the present invention can have high crystallinity as the change in haze at a specific temperature is controlled. In particular, when the polyester film according to the present invention is crushed together with a waste plastic container to form mixed flakes, and when the mixed flakes are washed and sorted, the haze at a specific temperature (e.g., the temperature of water used for washing) increases to take on an opaque color, so that the film can be easily removed (sorted) during the washing and sorting operations.

Accordingly, since the recycling process of waste plastic containers to which the polyester film is combined is possible without performing the task of separating (removing) the polyester film, the present invention can increase the recyclability of waste plastic containers. In addition, since the polyester film according to the present invention is excellent in heat shrinkability, thermal resistance, transparency, processability, and the like, it can be advantageously used as a heat-shrinkable film for packaging and/or labels for plastic containers.

### Best Mode for Carrying out the Invention

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element, and/or component, unless specifically stated to the contrary.

All numbers and expressions related to the quantities of components, reaction conditions, and the like used herein are to be understood as being modified by the term "about" unless otherwise indicated.

The present invention relates to a polyester film, in which the change in haze at a specific temperature is controlled to a desired range by controlling the content of specific components, controlling the stretching and shrinkage process, and the like, whereby it has high crystallinity and excellent heat shrinkability, and a process for preparing the same, which will be described in detail as follows.

### Polyester film

The polyester film according to the present invention comprises a polyester resin comprising a diol repeat unit derived from a diol component; and a dicarboxylic acid repeat unit derived from a dicarboxylic acid component, wherein the heat shrinkage rate in the main shrinkage direction at 85°C is 50% or more, and when T1 is 80°C and T2 is 85°C, the average change in haze (ΔHₐᵥₑ) according to the following Equation 1 is 0.5 to 10. [Equation 1] ${ΔH}_{ave} \left(%/°C\right) = \left|{H}_{T 2}-{H}_{T 1}\right| / \left|T2-T1\right|$

In Equation 1, H_{T1} is the haze of the polyester film at the temperature of T1, and H_{T2} is the haze of the polyester film at the temperature of T2.

The main shrinkage direction may be the longitudinal direction (MD) or the transverse direction (TD). Preferably, it may be the transverse direction (TD).

Specifically, the heat shrinkage rate of the polyester film in the main shrinkage direction at 85°C may be 51% or more, 52% or more, 53% or more, 54% or more, 55% or more, 56% or more, 57% or more, 58% or more, 59% or more, or 60% or more (e.g., 50 to 60%, 50 to 58%, 51 to 58%, 51 to 57%, or 52 to 56%).

According to the subject invention, the heat shrinkage rate of the polyester film in the main shrinkage direction at 90°C may be 60% or more, specifically, 61% or more, 63% or more, 64% or more, 66% or more, 68% or more, 70% or more, 72% or more, 74% or more, 76% or more, 78% or more, or 80% or more (e.g., 60 to 80%, 62 to 79%, 64 to 79%, 65 to 78%, or 66 to 78%).

As the heat shrinkage rates in the main shrinkage direction at 85°C and 90°C are each within the above ranges, the heat shrinkability of the polyester film is excellent, so that the polyester film can be advantageously used as a heat-shrinkable film for packaging and/or labels. The main shrinkage direction may be the transverse direction (TD) or the longitudinal direction (MD).

Meanwhile, when T1 is 80°C and T2 is 85°C, the average change in haze (ΔHₐᵥₑ) of the polyester film according to the above Equation 1 may be 0.5 to 10, specifically, 0.6 to 10, 0.7 to 10, 0.8 to 10, 0.9 to 10, 1 to 10, 1.3 to 9.9, 1.5 to 9.8, 1.8 to 9.7, 2.0 to 9.6, 2.3 to 9.5, 2.6 to 9.4, 3.0 to 9.3, 3.5 to 9.2, 4.0 to 9.1, or 5.0 to 9.0. When T1 is 80°C and T2 is 85°C, if the average change in haze (ΔHₐᵥₑ) according to the above Equation 1 is less than 0.5, it means that the polyester film does not have a crystallinity at the required level for a washing step and a recycling process, which may significantly deteriorate the recyclability of the polyester film. On the other hand, if the average change in haze (ΔHₐᵥₑ) according to the above Equation 1 exceeds 10, it means that the crystallinity of the polyester film is excessively high while the transparency is low, whereby it may be difficult to secure the moldability and transparency of the polyester film.

According to the present invention, when T1 is 85°C and T2 is 90°C, the average change in haze (ΔHₐᵥₑ) of the polyester film according to the above Equation 1 may be 1 to 5, specifically, 1.3 to 4.9, 1.5 to 4.9, 1.8 to 4.8, 2.0 to 4.8, 2.2 to 4.7, 2.4 to 4.7, 2.5 to 4.6, 2.7 to 4.5, 2.9 to 4.5, or 3.0 to 4.4.

In addition, according to the present invention, when T1 is 75°C and T2 is 80°C, the average change in haze (ΔHₐᵥₑ) of the polyester film according to the above Equation 1 may be 0.5 to 8, specifically, 0.8 to 7.5, 1.0 to 7.3, 1.3 to 7.0, 1.5 to 6.8, 1.6 to 6.5, 1.7 to 6.3, 1.8 to 6.0, 2.0 to 5.8, 2.5 to 5.5, or 3.0 to 5.0.

As described above, the change in haze at relatively high temperatures of 75°C, 80°C, 85°C, and 90°C is defined as the average change in haze (ΔHₐᵥₑ), and the average change in haze (ΔHₐᵥₑ) at each specific temperature is controlled to the above range. As a result, the polyester film has high crystallinity while ensuring moldability and transparency, so that the present invention can provide a polyester film with excellent recyclability, moldability, and transparency. Meanwhile, the unit of the change in haze average (ΔHₐᵥₑ) may be expressed as %/°C.

According to the present invention, the polyester film may have a haze of 10% or more at 80°C and a haze of 50% or more at 90°C. Specifically, the haze of the polyester film at 80°C may be 11% or more, 13% or more, 15% or more, 17% or more, 20% or more, 22% or more, 24% or more, 26% or more, 28% or more, 30% or more, 32% or more, 34% or more, or 35% or more (e.g., 10 to 35%, 15 to 34%, 20 to 33%, 23 to 32%, 25 to 31%, or 27 to 30%). In addition, the haze of the polyester film at 90°C may be 53% or more, 56% or more, 60% or more, 63% or more, 65% or more, 68% or more, 70% or more, 73% or more, 75% or more, 78% or more, 80% or more, 82% or more, or 86% or more (e.g., 50 to 90%, 55 to 86%, 60 to 84%, 65 to 83%, 70 to 82%, or 72 to 80%).

In addition, according to the present invention, the polyester film may have a difference (H₈₀ - H₇₅) between the haze at 80°C (H₈₀) and the haze at 75°C (H₇₅) of 7 to 30%, a difference (H₈₅ - H₈₀) between the haze at 85°C (H₈₅) and the haze at 80°C (H₈₀) of 10 to 50%, and a difference (H₉₀ - H₈₅) between the haze at 90°C (H₉₀) and the haze at 85°C (H₈₅) of 10 to 25%. Specifically, the difference (H₈₀ - H₇₅) may be 7.3 to 29.5%, 7.5 to 29.5%, 8 to 29%, 8.5 to 29%, 9 to 28.5%, 10 to 28.5%, 15 to 28%, 20 to 28%, or 20.5 to 27.5%. In addition, the difference (H₈₅ - H₈₀) may be 10.5 to 49%, 11.5 to 48.5%, 15 to 48%, 20 to 47.5%, 25 to 47%, 28 to 46.5%, 30 to 45%, 32 to 43%, or 33 to 40%. In addition, the difference (H₉₀ - H₈₅) may be 12 to 24.5%, 13 to 24%, 14 to 23.5%, 15 to 23%, 16 to 22.5%, 16.5 to 22%, 17 to 21.5%, 17.3 to 21%, or 18 to 20.5%.

As the respective hazes at 80°C and 90°C and the differences in haze with respect to temperature (H₈₀ - H₇₅, H₈₅ - H₈₀, and H₉₀ - H₈₅) are each controlled to the above ranges, the polyester film of the present invention can have excellent recyclability, thermal resistance, moldability, and transparency.

The polyester film according to the present invention has the contents of metal components and non-metal components controlled to specific ranges. As a result, the haze increase rate of the polyester film with respect to temperature is large, which leads to an increase in the crystallinity of the polyester film, thereby enhancing the recyclability of the polyester film.

For example, according to the present invention, the polyester film may have a content of metals of 5 to 250 ppm when measured by inductively coupled plasma atomic emission spectroscopy (ICP-AES). Specifically, the content of metals may be 8 to 240 ppm, 10 to 230 ppm, 13 to 220 ppm, 15 to 200 ppm, 18 to 190 ppm, 20 to 180 ppm, 25 to 175 ppm, 30 to 170 ppm, 35 to 165 ppm, 40 to 160 ppm, 45 to 155 ppm, or 50 to 150 ppm.

The metals are derived from raw material components (e.g., catalyst, colorant, crystallizing agent, and the like) used in the production of polyester films. They act as crystal nuclei in the production process of polyester films (or polyester resins), so that a polyester film with high crystallinity can be obtained. These metals are not particularly limited, but they may comprise at least one selected from the group consisting of antimony (Sb), titanium (Ti), zinc (Zn), germanium (Ge), magnesium (Mg), and manganese (Mn). As a result, the polyester film may have a crystallinity at the desired level.

In addition, according to the present invention, the polyester film may have a content of phosphorous (P) of 5 to 200 ppm when measured by inductively coupled plasma atomic emission spectroscopy (ICP-AES). Specifically, the content of phosphorous (P) may be 5 to 198 ppm, 7 to 195 ppm, 9 to 190 ppm, 10 to 185 ppm, 13 to 180 ppm, 15 to 170 ppm, 17 to 160 ppm, 20 to 150 ppm, 22 to 130 ppm, 25 to 120 ppm, 26 to 100 ppm, 27 to 50 ppm, or 27 to 28 ppm.

Meanwhile, the polyester film may have a total content of metals and phosphorous (P) (metal content + phosphorus (P) content) of 10 to 450 ppm, specifically, 20 to 400 ppm, 30 to 350 ppm, 40 to 330 ppm, 50 to 300 ppm, 60 to 280 ppm, 65 to 275 ppm, 80 to 270 ppm, or 90 to 265 ppm.

According to the present invention, the polyester film may have a melting temperature (Tₘ) of 230°C or lower, specifically, 225°C or lower, 220°C or lower, 215°C or lower, 210°C or lower, 205°C or lower, 200°C or lower, 195°C or lower, 185°C or lower, 175°C or lower, 165°C or lower, 155°C or lower, or 150°C or lower (e.g., 150 to 230°C, 151 to 220°C, 152 to 210°C, 153 to 200°C, 154 to 195°C, or 155 to 180°C). As the melting temperature (Tₘ) is within the above range, a polyester film having a crystallinity at the desired level and excellent moldability (processability) can be provided.

Meanwhile, the polyester film comprises a diol repeat unit derived from a diol component; and a dicarboxylic acid repeat unit derived from a dicarboxylic acid component.

According to the present invention, the diol component for forming a diol repeat unit may not be particularly limited as long as it is a commonly known diol component. Specifically, the diol component may comprise at least one (e.g., 2 or more, 3 or more, 4 or more, or 5 or more) selected from the group consisting of bis-2-hydroxyethyl terephthalate, isosorbide, neopentyl glycol, ethylene glycol, diethylene glycol, cyclohexanedimethanol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, 4-(hydroxymethyl)cyclohexylmethyl-4-(hydroxymethyl)cyclohexanecarboxylate (CHDM derivative), 4-(4-(hydroxymethyl)cyclohexylmethoxymethyl)cyclohexylmethanol (CHDM derivative), recycled bis-2-hydroxyethyl terephthalate, recycled isosorbide, recycled neopentyl glycol, recycled ethylene glycol, recycled diethylene glycol, and recycled cyclohexanedimethanol.

More specifically, the diol component may comprise at least one selected from the group consisting of a first diol component comprising ethylene glycol (EG), recycled ethylene glycol (r-EG), or a combination thereof; a second diol component comprising bis-2-hydroxyethyl terephthalate (BHET), recycled bis-2-hydroxyethyl terephthalate (r-BHET), or a combination thereof; and a third diol component comprising isosorbide (ISB), diethylene glycol (DEG), cyclohexanedimethanol (CHDM), neopentyl glycol (NPG), recycled isosorbide (r-ISB), recycled diethylene glycol (r-DEG), recycled cyclohexanedimethanol (r-CHDM), recycled neopentyl glycol (r-NPG), or a combination thereof.

The amount (amount added in the reaction) of the first diol component used is not particularly limited, but it may be 50 to 95% by mole, 55 to 95% by mole%, 60 to 93% by mole, 65 to 93% by mole, 70 to 90% by mole, 75 to 90% by mole, or 80 to 85% by mole, based on the total percent by mole of the diol component. Accordingly, the polyester resin may comprise a repeat unit (a) derived from the first diol component. As the amount of the first diol component used is within the above range, a polyester resin with excellent basic physical properties can be produced economically.

The amount (amount added in the reaction) of the second diol component used is not particularly limited, but it may be 5 to 90% by mole, 5.5 to 80% by mole, 6 to 70% by mole, 7 to 60% by mole, 8 to 50% by mole, 9 to 40% by mole, or 10 to 30% by mole, based on the total percent by mole of the diol component. Accordingly, the polyester resin may comprise a repeat unit (b) derived from the second diol component. As the amount of the second diol component used is within the above range, it is possible to prepare a polyester resin having a viscosity at the required level in the preparation process of films. As a result, a polyester resin with excellent quality can be provided.

The amount (amount added in the reaction) of the third diol component used is not particularly limited, but it may be 1 to 45% by mole, 2 to 43% by mole, 3 to 40% by mole, 4 to 40% by mole, 5 to 40% by mole, 6 to 40% by mole, or 7 to 40% by mole, based on the total percent by mole of the diol component. Accordingly, the polyester resin may comprise a repeat unit (c) derived from the third diol component. As the amount of the third diol component used is within the above range, a polyester resin with excellent basic physical properties, along with excellent moldability (processability), can be produced.

For example, when the basic physical properties and moldability (processability) of the polyester resin are taken into consideration, the amount of isosorbide or recycled isosorbide used among the third diol component may be 0 to 5% by mole, 0.1 to 4% by mole, 0.3 to 3% by mole, or 0.5 to 2% by mole, based on the total percent by mole of the diol component. In addition, the amount of diethylene glycol or recycled diethylene glycol used among the third diol component may be 5 to 30% by mole, 6 to 28% by mole, 7 to 26% by mole, or 8 to 25% by mole, based on the total percent by mole of the diol component. In addition, the amount of cyclohexanedimethanol or recycled cyclohexanedimethanol used among the third diol component may be 0 to 35% by mole, 3 to 33% by mole, 5 to 30% by mole, or 10 to 28% by mole, based on the total percent by mole of the diol component. In addition, the amount of neopentyl glycol or recycled neopentyl glycol used among the third diol component may be 0 to 20% by mole, 1 to 18% by mole, 1.5 to 16% by mole, or 2 to 10% by mole, based on the total percent by mole of the diol component.

According to the present invention, the dicarboxylic acid component for forming a dicarboxylic acid repeat unit may not be particularly limited as long as it is a commonly known dicarboxylic acid component. Specifically, the dicarboxylic acid component may comprise at least one selected from the group consisting of terephthalic acid, isophthalic acid, dimethyl phthalate, dimethyl isophthalate, dimethyl terephthalate, phthalic acid, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, azelaic acid, and recycled terephthalic acid.

Meanwhile, the recycled bis-2-hydroxyethyl terephthalate, recycled isosorbide, recycled neopentyl glycol, recycled ethylene glycol, recycled diethylene glycol, recycled cyclohexanedimethanol, and recycled terephthalic acid may refer to recycled raw materials (monomers) obtained by subjecting a waste polyester resin or a waste polyester article (e.g., films, sheets, fibers, containers, and the like) after use to a commonly known depolymerization process.

The polyester resin comprising the diol repeat unit and the dicarboxylic acid repeat unit may have an intrinsic viscosity (IV) (at 35°C) of 0.5 to 0.9 dl/g. Specifically, the intrinsic viscosity (IV) of the polyester resin at 35°C may be 0.5 to 0.87 dl/g, 0.5 to 0.85 dl/g, 0.55 to 0.83 dl/g, 0.58 to 0.82 dl/g, 0.6 to 0.81 dl/g, or 0.63 to 0.80 dl/g.

The polyester resin may be in the form of chips, pellets, or powder.

The polyester resin may be a homopolymer or a copolymer. Specifically, the polyester resin may be selected from the group consisting of polyethylene terephthalate (PET), polyethylene terephthalate glycol (PETG), polyester sulfone (PES), polybutylene terephthalate (PBT), polytrimethylene terephthalate (PTT), polybutylene adipate-co-terephthalate (PBAT), polypropylene adipate-co-terephthalate (PPAT), polycyclohexane dimethyl terephthalate (PCT), and thermoplastic polyester elastomer (TPEE).

### Process for preparing a polyester film

The process for preparing a polyester film according to the present invention comprises (1) polymerizing a diol component and a dicarboxylic acid component to prepare a polyester resin; (2) preparing a stretched film from the polyester resin; and (3) heat-setting the stretched film. A polyester film prepared through the above steps has a heat shrinkage rate of 50% or more in the main shrinkage direction at 85°C, wherein when T1 is 80°C and T2 is 85°C, the average change in haze (ΔHₐᵥₑ) according to the following Equation 1 is 0.5 to 10. The process for preparing a polyester film will be described in detail as follows. Here, the description of the following Relationship 1 is the same as described above and, therefore, will be omitted. [Equation 1] ${ΔH}_{ave} \left(%/°C\right) = \left|{H}_{T 2}-{H}_{T 1}\right| / \left|T2-T1\right|$

In Equation 1, H_{T1} is the haze of the polyester film at the temperature of T1, and H_{T2} is the haze of the polyester film at the temperature of T2.

### Step (1): Preparation of a polyester resin

Step (1) is a step of subjecting a diol component and a dicarboxylic acid component to an esterification reaction (or transesterification reaction) to obtain a reactant (e.g., oligomer), which is then subjected to a polycondensation reaction to prepare a polyester resin. Here, since the diol component and the dicarboxylic acid component are the same as described above, a detailed description thereon is omitted.

The conditions under which the esterification reaction (or transesterification reaction) is carried out may not be particularly limited. Specifically, the temperature at which the esterification reaction is carried out may be 230 to 290°C, 235 to 285°C, 240 to 280°C, 245 to 275°C, or 250 to 275°C. In addition, the pressure under which the esterification reaction is carried out may be 0 to 4 kgf/cm², 0.5 to 3.5 kgf/cm², 0.5 to 3 kgf/cm², 1 to 2.5 kgf/cm², or 1 to 2 kgf/cm². As the esterification reaction is carried out under the above conditions, the production of side reactants is minimized while a reactant (oligomer) having a molecular weight at the desired level can be obtained in high yield.

In addition to the diol component and the dicarboxylic acid component, at least one additive selected from the group consisting of a catalyst, a colorant, a crystallizing agent, an antioxidant, and a branching agent may be fed to the reactor in which the esterification reaction (or transesterification reaction) is carried out.

The catalyst may be methylates of sodium or/and magnesium; acetates, borates, fatty acid salts, or carbonates of Ge, Zn, Cd, Mn, Co, Ca, and Ba; and oxides or hydrates of Ge, Mg, Pb, Mn, Ti, Sb, Sn, and Al. For example, the catalyst may be tetraethyl titanate, acetyltripropyl titanate, tetrapropyl titanate, tetrabutyl titanate, 2-ethylhexyl titanate, octylene glycol titanate, triethanolamine titanate, acetylacetonate titanate, ethylacetoacetic ester titanate, isostearyl titanate, titanium dioxide, germanium dioxide, germanium tetrachloride, germanium ethyleneglycoxide, germanium acetate, or combinations thereof.

As the colorant, organic compounds such as cobalt-based compounds, anthraquinone-based compounds, perinone-based compounds, azo-based compounds, and methine-based compounds (for example, cobalt acetate, cobalt propionate, Polysynthren Blue RLS toner of Clariant, and Solvaperm Red BB toner of Clariant) may be used.

As the crystallizing agent, a crystal nucleating agent, an ultraviolet absorber, a polyolefin resin, a polyamide resin, or the like may be used.

As the antioxidant, hindered phenol-based compounds, phosphite-based compounds, thioether-based compounds, or the like may be used.

As the branching agent, trimellitic acid, trimellitic anhydride, trimethylol propane, or a combination thereof as described above may be used.

The reactant obtained through the esterification reaction (or transesterification reaction) may then be fed to a polycondensation reactor to carry out a polycondensation reaction. The conditions under which the polycondensation reaction is carried out may not be particularly limited. Specifically, the temperature at which the polycondensation reaction is carried out may be 250 to 300°C, 255 to 295°C, 260 to 290°C, 265 to 285°C, or 270 to 285°C. In addition, the pressure under which the polycondensation reaction is carried out may be lower (reduced pressure) than normal pressure (e.g., 1 atm). As the polycondensation reaction is carried out under the above conditions, a polyester resin (polymer) having excellent processability can be efficiently produced.

Thereafter, the polyester resin obtained through the polycondensation reaction may be pelletized through procedures comprising extrusion and underwater cutting.

### (2) Preparation of a stretched film

Step (2) is a step of preparing a stretched film from the polyester resin obtained in step (1) above. Specifically, the polyester resin may be extruded to prepare an unstretched sheet, which is then subjected to a stretching step to prepare the stretched film.

The extrusion of the polyester resin may be carried out by a conventionally known method. In such an event, the extrusion temperature may specifically be 230 to 300°C, 240 to 290°C, 250 to 280°C, or 260 to 270°C.

The unstretched sheet obtained through the extrusion may be subjected to a preheating step before being subjected to the stretching step. The preheating of the unstretched sheet may be carried out in the range of T_{g} + 5°C to T_{g} + 50°C based on the glass transition temperature (T_{g}) of the polyester resin. Specifically, it may be carried out in the range of 70°C to 100°C. When the preheating is carried out within the above range, the unstretched sheet may have flexibility suitable for a stretching step, so that the breakage of the unstretched sheet in the stretching step can be minimized.

The stretching of the unstretched sheet may be carried out by uniaxial stretching in either the longitudinal direction (MD) or the transverse direction (TD), or by biaxial stretching in both the longitudinal direction (MD) and the transverse direction (TD).

When the unstretched sheet is stretched in the longitudinal direction (MD), the stretching ratio is not particularly limited. But it may be 1.5 to 6 times, 1.7 to 5.8 times, 1.8 to 5.5 times, 2 to 5.3 times, or 2.5 to 5 times, in light of the crystallinity of the polyester resin. In addition, when the unstretched sheet is stretched in the transverse direction (TD), the stretching ratio is not particularly limited. But it may be 1.1 to 5 times, 1.3 to 5 times, 1.5 to 5 times, 2 to 5 times, or 3 to 5 times, in light of the crystallinity of the polyester resin.

Meanwhile, the stretching temperature of the unstretched sheet is not particularly limited. But it may be in the range of T_{g} + 5°C to T_{g} + 20°C or T_{g} + 8°C to T_{g} + 10°C, based on the glass transition temperature (T_{g}) of the polyester resin. Specifically, it may be 55 to 180°C, 60 to 170°C, 63 to 150°C, 65 to 130°C, 68 to 110°C, 70 to 100°C, or 70 to 95°C. As the stretching temperature is within the above range, a polyester film with a controlled change in haze can be prepared as desired.

### Step (3): Heat setting

Step (3) is a step of heat-setting the stretched film obtained in step (2) above. The heat-setting temperature of the stretched film is not particularly limited. But it may be in the range of T_{g} + 5°C to T_{g} + 50°C, based on the glass transition temperature (T_{g}) of the polyester resin. Specifically, it may be 60 to 200°C, 65 to 190°C, 70 to 180°C, 75 to 170°C, 80 to 165°C, 85 to 160°C, or 90 to 130°C.

### Mode for the Invention

Hereinafter, the present invention will be described in more detail with reference to embodiments. However, these examples are provided only for illustration purposes, and the present invention is not limited thereto.

### <Preparation of a polyester resin>

### [Example 1]

A 10-liter reactor equipped with a column and a condenser that can be cooled by water was charged with recycled bis-2-hydroxyethyl terephthalate (r-BHET, 588.6 g), terephthalic acid (TPA, 3,461.9 g), isosorbide (ISB, 48.3 g), ethylene glycol (EG, 1,148.5 g), 1,4-cyclohexanedimethanol (CHDM, 778.6 g), recycled diethylene glycol (r-DEG, 375.7 g), a Ge catalyst (5.0 g), a Ti catalyst (1.5 g), phosphoric acid (0.6 g), a blue toner (0.005 g), and a red toner (0.003 g). Next, after the temperature of the reactor was raised to 265°C, an esterification reaction (ES) was carried out at 265°C under a pressure of 2 kgf/cm² to obtain a transparent reactant.

Subsequently, the reactant was transferred to a polycondensation reactor, and a polycondensation reaction (PA) was then carried out at 270°C while the pressure of the polycondensation reactor was maintained at a pressure lower than normal pressure. When the intrinsic viscosity (melt intrinsic viscosity) (IV) of the reactant in the polycondensation reactor reached 0.77 dl/g, the reactant was then discharged to the outside of the polycondensation reactor to form strands. Thereafter, they were solidified with a cooling liquid and then granulated to have an average weight of about 12 to 14 mg to prepare polyester resin (copolymer) chips.

### [Example 2]

A 10-liter reactor equipped with a column and a condenser that can be cooled by water was charged with recycled bis-2-hydroxyethyl terephthalate (r-BHET, 3,517.7 g), terephthalic acid (TPA, 1,532.6 g), recycled ethylene glycol (r-EG, 22.8 g), 1,4-cyclohexanedimethanol (CHDM, 627.8 g), neopentyl glycol (NPG, 53.3 g), diethylene glycol (DEG, 374.2 g), a cyclohexanedimethanol derivative (CHDM derivative, 123.7 g), a Ti catalyst (0.4 g), phosphoric acid (0.4 g), a blue toner (0.005 g), and a red toner (0.005 g). Next, after the temperature of the reactor was raised to 255°C, an esterification reaction (ES) was carried out at 255°C under a pressure of 1 kgf/cm² to obtain a transparent reactant.

Subsequently, the reactant was transferred to a polycondensation reactor, and a polycondensation reaction (PA) was then carried out at 285°C while the pressure of the polycondensation reactor was maintained at a pressure lower than normal pressure. When the intrinsic viscosity (melt intrinsic viscosity) (IV) of the reactant in the polycondensation reactor reached 0.65 dl/g, the reactant was then discharged to the outside of the polycondensation reactor to form strands. Thereafter, they were solidified with a cooling liquid and then granulated to have an average weight of about 12 to 14 mg to prepare polyester resin (copolymer) chips.

### [Example 3]

A 10-liter reactor equipped with a column and a condenser that can be cooled by water was charged with recycled bis-2-hydroxyethyl terephthalate (r-BHET, 1,756.6 g), terephthalic acid (TPA, 2,678.7 g), ethylene glycol (EG, 721.2 g), recycled 1,4-cyclohexanedimethanol (r-CHDM, 922.1 g), diethylene glycol (DEG, 287.5 g), a Ti catalyst (0.2 g), phosphoric acid (3.5 g), a blue toner (0.005 g), and a red toner (0.005 g). Next, after the temperature of the reactor was raised to 273°C, an esterification reaction (ES) was carried out at 273°C under a pressure of 0 kgf/cm² to obtain a transparent reactant.

Subsequently, the reactant was transferred to a polycondensation reactor, and a polycondensation reaction (PA) was then carried out at 275°C while the pressure of the polycondensation reactor was maintained at a pressure lower than normal pressure. When the intrinsic viscosity (melt intrinsic viscosity) (IV) of the reactant in the polycondensation reactor reached 0.80 dl/g, the reactant was then discharged to the outside of the polycondensation reactor to form strands. Thereafter, they were solidified with a cooling liquid and then granulated to have an average weight of about 12 to 14 mg to prepare polyester resin (copolymer) chips.

### [Example 4]

A 10-liter reactor equipped with a column and a condenser that can be cooled by water was charged with recycled bis-2-hydroxyethyl terephthalate (r-BHET, 4,240.6 g), terephthalic acid (TPA, 1,187.8 g), ethylene glycol (EG, 117.9 g), 1,4-cyclohexanedimethanol (CHDM, 534.2 g), diethylene glycol (DEG, 416.4 g), a Ge catalyst (1.0 g), a Ti catalyst (0.1 g), phosphoric acid (7.0 g), a blue toner (0.025 g), and a red toner (0.010 g). Next, after the temperature of the reactor was raised to 260°C, an esterification reaction (ES) was carried out at 260°C under a pressure of 1 kgf/cm² to obtain a transparent reactant.

Subsequently, the reactant was transferred to a polycondensation reactor, and a polycondensation reaction (PA) was then carried out at 275°C while the pressure of the polycondensation reactor was maintained at a pressure lower than normal pressure. When the intrinsic viscosity (melt intrinsic viscosity) (IV) of the reactant in the polycondensation reactor reached 0.78 dl/g, the reactant was then discharged to the outside of the polycondensation reactor to form strands. Thereafter, they were solidified with a cooling liquid and then granulated to have an average weight of about 12 to 14 mg to prepare polyester resin (copolymer) chips.

### [Example 5]

A 10-liter reactor equipped with a column and a condenser that can be cooled by water was charged with recycled bis-2-hydroxyethyl terephthalate (r-BHET, 1,266.8 g), terephthalic acid (TPA, 3,311.7 g), ethylene glycol (EG, 1,506.7 g), recycled neopentyl glycol (r-NPG, 432.3 g), diethylene glycol (DEG, 155.5 g), a Ge catalyst (5.0 g), a Ti catalyst (0.2 g), phosphoric acid (4.0 g), cobalt acetate (0.2 g), a blue toner (0.015 g), and a red toner (0.005 g). Next, after the temperature of the reactor was raised to 250°C, an esterification reaction (ES) was carried out at 250°C under a pressure of 1 kgf/cm² to obtain a transparent reactant.

Subsequently, the reactant was transferred to a polycondensation reactor, and a polycondensation reaction (PA) was then carried out at 285°C while the pressure of the polycondensation reactor was maintained at a pressure lower than normal pressure. When the intrinsic viscosity (melt intrinsic viscosity) (IV) of the reactant in the polycondensation reactor reached 0.70 dl/g, the reactant was then discharged to the outside of the polycondensation reactor to form strands. Thereafter, they were solidified with a cooling liquid and then granulated to have an average weight of about 12 to 14 mg to prepare polyester resin (copolymer) chips.

### [Comparative Example 1]

A 10-liter reactor equipped with a column and a condenser that can be cooled by water was charged with recycled bis-2-hydroxyethyl terephthalate (r-BHET, 1,254.9 g), terephthalic acid (TPA, 3,280.6 g), ethylene glycol (EG, 1,577.7 g), 1,4-cyclohexanedimethanol (CHDM, 395.3 g), diethylene glycol (DEG, 154.0 g), a Ti catalyst (0.3 g), phosphoric acid (2.0 g), a blue toner (0.005 g), and a red toner (0.005 g). Next, after the temperature of the reactor was raised to 263°C, an esterification reaction (ES) was carried out at 263°C under a pressure of 1 kgf/cm² to obtain a transparent resulting material.

Subsequently, the reactant was transferred to a polycondensation reactor, and a polycondensation reaction (PA) was then carried out at 285°C while the pressure of the polycondensation reactor was maintained at a pressure lower than normal pressure. When the intrinsic viscosity (melt intrinsic viscosity) (IV) of the reactant in the polycondensation reactor reached 0.70 dl/g, the reactant was then discharged to the outside of the polycondensation reactor to form strands. Thereafter, they were solidified with a cooling liquid and then granulated to have an average weight of about 12 to 14 mg to prepare polyester resin (copolymer) chips.

### [Comparative Example 2]

A 10-liter reactor equipped with a column and a condenser that can be cooled by water was charged with recycled bis-2-hydroxyethyl terephthalate (r-BHET, 554.1 g), terephthalic acid (TPA, 3,259.2 g), ethylene glycol (EG, 1,448.9 g), 1,4-cyclohexanedimethanol (CHDM, 349.0 g), diethylene glycol (DEG, 272.0 g), a Ti catalyst (2.5 g), phosphoric acid (0.2 g), a blue toner (0.010 g), and a red toner (0.005 g). Next, after the temperature of the reactor was raised to 263°C, an esterification reaction (ES) was carried out at 263°C under a pressure of 0 kgf/cm² to obtain a transparent reactant.

Subsequently, the reactant was transferred to a polycondensation reactor, and a polycondensation reaction (PA) was then carried out at 275°C while the pressure of the polycondensation reactor was maintained at a pressure lower than normal pressure. When the intrinsic viscosity (melt intrinsic viscosity) (IV) of the reactant in the polycondensation reactor reached 0.78 dl/g, the reactant was then discharged to the outside of the polycondensation reactor to form strands. Thereafter, they were solidified with a cooling liquid and then granulated to have an average weight of about 12 to 14 mg to prepare polyester resin (copolymer) chips.

### [Comparative Example 3]

A 10-liter reactor equipped with a column and a condenser that can be cooled by water was charged with terephthalic acid (TPA, 3,316.3 g), ethylene glycol (EG, 1,237.0 g), 1,4-cyclohexanedimethanol (CHDM, 2,237.5 g), diethylene glycol (DEG, 49.8 g), a Ge catalyst (1.0 g), a Ti catalyst (0.5 g), a blue toner (0.005 g), and a red toner (0.005 g). Next, after the temperature of the reactor was raised to 263°C, an esterification reaction (ES) was carried out at 263°C under a pressure of 1 kgf/cm² to obtain a transparent resulting material.

Subsequently, the reactant was transferred to a polycondensation reactor, and a polycondensation reaction (PA) was then carried out at 275°C while the pressure of the polycondensation reactor was maintained at a pressure lower than normal pressure. When the intrinsic viscosity (melt intrinsic viscosity) (IV) of the reactant in the polycondensation reactor reached 0.70 dl/g, the reactant was then discharged to the outside of the polycondensation reactor to form strands. Thereafter, they were solidified with a cooling liquid and then granulated to have an average weight of about 12 to 14 mg to prepare polyester resin (copolymer) chips.

### <Preparation of a polyester film>

### [Preparation Example 1]

The polyester resin chips prepared in Example 1 were fed to an extruder, melt-extruded at a temperature of 250 to 270°C, and cast at a temperature of 70 to 90°C to prepare an unstretched sheet having a thickness of 250 µm. Subsequently, while the unstretched sheet was heated to 78 to 80°C, it was stretched at a stretching ratio of 5 times in the transverse direction (TD) only to prepare a stretched film. Thereafter, the stretched film was heat set to prepare a polyester film having a thickness of 40 to 60 µm (average thickness: 50 µm).

### [Preparation Examples 2 to 5]

A polyester film was prepared through the same procedure as in Preparation Example 1, except that the polyester resin chips prepared in Examples 2 to 5, instead of the polyester resin chips prepared in Example 1, were used, respectively; and that the stretching temperature of the unstretched sheet was adjusted to T_{g} + 8°C to T_{g} + 10°C (T_{g}: glass transition temperature of the polyester resin chips).

### [Comparative Preparation Examples 1 to 3]

A polyester film was prepared through the same procedure as in Preparation Example 1, except that the polyester resin chips prepared in Comparative Examples 1 to 3, instead of the polyester resin chips prepared in Example 1, were used, respectively; and that the stretching temperature of the unstretched sheet was adjusted to T_{g} + 8°C to T_{g} + 10°C (T_{g}: glass transition temperature of the polyester resin chips).

### [Test Example 1] Average change in haze

The polyester films (width (TD): 8 cm and length (MD): 3 cm) prepared in Preparation Examples 1 to 5 and Comparative Preparation Examples 1 to 3 were each placed in a water bath containing water at 95°C and shrunk for 15 seconds to make a heat-shrinkable film state combined with a PET bottle. Next, the polyester films subjected to the above shrinkage and a subsequent drying step were each cut into a size of 2 cm in width and 2 cm in length to prepare polyester film specimens, which were then placed in water baths containing water at 75°C, 80°C, 85°C, and 90°C, respectively, and kept in an immersed state for 15 minutes. Next, the immersed polyester film specimens were taken out from the respective water baths and left at room temperature for 30 minutes or longer to slowly lower the temperature of the polyester film specimens to room temperature as a cooling step. Next, the haze of the polyester film specimens was measured with respect to temperature under ASTM D1003 conditions. Thereafter, the average change in haze (ΔHₐᵥₑ) was calculated according to the following Equation 1 when T1 is 75°C and T2 is 80°C, when T1 is 80°C and T2 is 85°C, and when T1 is 85°C and T2 is 90°C. The results are shown in Table 1 below. In addition, the difference in haze of the polyester film specimens with respect to temperature (H₈₀ - H₇₅, H₈₅ - H₈₀, and H₉₀ - H₈₅) was also obtained. [Equation 1] ${ΔH}_{ave} \left(%/°C\right) = \left|{H}_{T 2}-{H}_{T 1}\right| / \left|T2-T1\right|$

In Equation 1, H_{T1} is the haze of the polyester film at the temperature of T1, and H_{T2} is the haze of the polyester film at the temperature of T2.

### [Test Example 2] Heat shrinkage rate

The polyester films prepared in Preparation Examples 1 to 5 and Comparative Preparation Examples 1 to 3 were evaluated for heat shrinkage rates, as follows. The results are shown in Table 1 below.

Specimen preparation: the polyester films were each cut into a size of 5 cm × 5 cm and stored at room temperature (20°C).

Heat shrinkage rate at 85°C: Each polyester film specimen was immersed in hot water at 85°C for 10 seconds, and the change in length in the transverse direction (TD), which was the main shrinkage direction, was calculated by the following Equation 2.

Heat shrinkage rate at 90°C: Each polyester film specimen was immersed in hot water at 90°C for 10 seconds, and the change in length in the transverse direction (TD), which was the main shrinkage direction, was calculated by the following Equation 2. [Equation 2] $Heat shrinkage rate \left(%\right) = \left\{\left({F}_{S 1}-{F}_{S 2}\right)/{F}_{S 1}\right\} \times 100$

In Equation 2, F_{S1}: the length of the polyester film specimen in the transverse direction (TD) before immersion in hot water, and F_{S2}: the length of the polyester film specimen in the transverse direction (TD) after immersion in hot water.

### [Test Example 3] Melting temperature

The polyester films prepared in Examples 1 to 5 and Comparative Examples 1 to 3 were each analyzed by differential scanning calorimetry (DSC) to determine whether a melting temperature (Tₘ) appeared. The results are shown in Table 1 below. The DSC analysis of the polyester films was carried out as follows.

DSC analysis device: DSC 1 model of Mettler Toledo was used.

Sample preparation: About 6-10 mg of each polyester film was taken and filled into an aluminum pan.

Scan conditions: It was heated from room temperature to 280°C at a rate of 10°C/minute, followed by annealing at 280°C for 3 minutes to obtain a DSC curve.

Observation of melting temperature: The temperature at which an endothermic peak appeared after the glass transition temperature (T_{g}) that appeared during the temperature elevation procedure in the obtained DSC curve was defined as the melting temperature (Tₘ). In addition, when two or more melting temperatures (Tₘ) appeared, the one with the larger ΔH value was taken as the melting temperature (Tₘ).

### [Test Example 4] Analysis of the contents of metal and phosphorous (P)

The polyester films prepared in Preparation Examples 1 to 5 and Comparative Preparation Examples 1 to 3 were each prepared in an amount of 0.3 g. Next, the prepared polyester film was treated with high-pressure microwaves in the presence of nitric acid and diluted with ultrapure water. The polyester film was then analyzed using inductively coupled plasma atomic emission spectrometry (ICP-AES) with a spectroscopic analyzer (Agilent, ICP-AES 7700S) to confirm the contents of metals and phosphorus (P). The results are shown in Table 1 below.

### [Test Example 5] Recyclability

The polyester films prepared in Preparation Examples 1 to 5 and Comparative Preparation Examples 1 to 3 were each cut into a size of 12 cm × 12 cm to prepare a polyester film specimen. Next, the prepared polyester film specimen was placed in a water bath containing water at 95°C and shrunk for 15 seconds to make a heat-shrinkable film state combined with a PET bottle. Next, the polyester film specimen subjected to the above shrinkage and a subsequent drying step, along with a PET bottle, was fed to a crusher and crushed to prepare mixed flakes. The prepared mixed flakes were immersed in warm water at 85°C (washing temperature) for 15 minutes, and the degree of opacity of the crushed flakes of the polyester film specimen was visually observed. The results are shown in Table 1 below.
⊚: Film specimen flakes were opaque (excellent recyclability)
○: Film specimen flakes were translucent (good recyclability)
×: Film specimen flakes were transparent (poor recyclability)

**[Table 1]**

| | | | Prep. Ex. 1 | Prep. Ex. 2 | Prep. Ex. 3 | Prep. Ex. 4 | Prep. Ex. 5 | C. Prep. Ex. 1 | C. Prep. Ex. 2 | C. Prep. Ex. 3 |
|---|---|---|---|---|---|---|---|---|---|---|
| Heat shrinkage rate (%) | 85°C | | 52% | 50% | 55% | 55% | 56% | 25% | 55% | 45% |
| | 90°C | | 67% | 69% | 78% | 67% | 65% | 35% | 70% | 57% |
| ΔHₐᵥₑ (%/°C) | T1 | T2 | | | | | | | | |
| | 75°C | 80°C | 5.0 | 5.4 | 5.5 | 1.9 | 4.1 | 0.4 | 0.3 | 1.0 |
| | 80°C | 85°C | 6.6 | 7.6 | 5.4 | 9.2 | 2.5 | 13.9 | 0.4 | 1.4 |
| | 85°C | 90°C | 4.3 | 2.6 | 3.5 | 3.9 | 3.9 | 3.8 | 2.0 | 7.4 |
| H₈₀ - H₇₅ (%) | | | 25.2 | 27.1 | 27.4 | 9.4 | 20.6 | 2.2 | 1.4 | 4.8 |
| H₈₅ - H₈₀ (%) | | | 33.0 | 38.2 | 27.1 | 46.1 | 12.4 | 69.3 | 2.1 | 7.0 |
| H₉₀ - H₈₅ (%) | | | 21.5 | 12.9 | 17.4 | 19.5 | 19.5 | 19.0 | 7.0 | 37.0 |
| Content of inorganic substances (ppm) | Metals excluding P | | 246 | 56 | 22 | 27 | 100 | 34 | 280 | 72 |
| | Phosphorous (P) | | 17 | 11 | 97 | 194 | 111 | 55 | 0 | 4 |
| Melting temp. (°C) | | | 167 | 185 | 155 | 190 | 205 | 232 | - | 265 |
| Recyclability | | | ⊚ | ○ | ○ | ○ | ⊚ | ○ | × | × |

Referring to Table 1 above, the polyester films of Preparation Examples 1 to 5 (Examples 1 to 5) according to the present invention had a high heat shrinkage rate with respect to temperature, while the average change in haze (ΔHₐᵥₑ) was controlled to the range of the present invention.

In contrast, the polyester film of Comparative Preparation Example 1 (Comparative Example 1) had a low heat shrinkage rate, making it difficult to be used as a heat-shrinkable film. In addition, in Comparative Preparation Example 2 (Comparative Example 2), the average change in haze was low, and a melting temperature did not appear, resulting in low crystallinity; thus, it is expected that when it is put into a recycling process, fusion with a plastic container would take place, making the recycling process impossible. In addition, in Comparative Preparation Example 3 (Comparative Example 3), a heat shrinkage rate at the level desired in the present invention was not satisfied, and the melting temperature was high; thus, it is expected that processability would be poor.

## Claims

1. A polyester film, which comprises a polyester resin comprising a diol repeat unit derived from a diol component; and a dicarboxylic acid repeat unit derived from a dicarboxylic acid component,
wherein the heat shrinkage rate of the polyester film in the main shrinkage direction at 85°C is 50% or more, and when T1 is 80°C and T2 is 85°C, the average change in haze (ΔHₐᵥₑ) according to the following Equation 1 is 0.5 to 10: [Equation 1] ${ΔH}_{ave} \left(%/°C\right) = \left|{H}_{T 2}-{H}_{T 1}\right| / \left|T2-T1\right|$
in Equation 1, H_{T1} is the haze of the polyester film at the temperature of T1, and H_{T2} is the haze of the polyester film at the temperature of T2.

2. The polyester film of claim 1, wherein when T1 is 85°C and T2 is 90°C, the average change in haze (ΔHₐᵥₑ) according to the above Equation 1 is 1 to 5.

3. The polyester film of claim 1, wherein when T1 is 75°C and T2 is 80°C, the average change in haze (ΔHₐᵥₑ) according to the above Equation 1 is 0.5 to 8.

4. The polyester film of claim 1, which has a haze of 10% or more at 80°C and a haze of 50% or more at 90°C.

5. The polyester film of claim 1, which has a difference (H₈₀ - H₇₅) between the haze at 80°C (H₈₀) and the haze at 75°C (H₇₅) of 7 to 30%,
a difference (H₈₅ - H₈₀) between the haze at 85°C (H₈₅) and the haze at 80°C (H₈₀) of 10 to 50%, and
a difference (H₉₀ - H₈₅) between the haze at 90°C (H₉₀) and the haze at 85°C (H₈₅) of 10 to 25%.

6. The polyester film of claim 1, which has a content of metals of 5 to 250 ppm when measured by inductively coupled plasma atomic emission spectroscopy (ICP-AES).

7. The polyester film of claim 6, wherein the metals comprise at least one selected from the group consisting of antimony (Sb), titanium (Ti), zinc (Zn), germanium (Ge), magnesium (Mg), and manganese (Mn).

8. The polyester film of claim 1, which has a content of phosphorous (P) of 5 to 200 ppm when measured by inductively coupled plasma atomic emission spectroscopy (ICP-AES).

9. The polyester film of claim 1, which has a melting temperature (Tₘ) of 230°C or lower.

10. The polyester film of claim 1, wherein the dicarboxylic acid component comprises at least one selected from the group consisting of terephthalic acid, isophthalic acid, dimethyl phthalate, dimethyl isophthalate, dimethyl terephthalate, phthalic acid, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, azelaic acid, and recycled terephthalic acid.

11. The polyester film of claim 1, wherein the diol component comprises at least one selected from the group consisting of bis-2-hydroxyethyl terephthalate, isosorbide, neopentyl glycol, ethylene glycol, diethylene glycol, cyclohexanedimethanol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, 4-(hydroxymethyl)cyclohexylmethyl-4-(hydroxymethyl)cyclohexanecarboxylate, 4-(4-(hydroxymethyl)cyclohexylmethoxymethyl)cyclohexylmethanol, recycled bis-2-hydroxyethyl terephthalate, recycled isosorbide, recycled neopentyl glycol, recycled ethylene glycol, recycled diethylene glycol, and recycled cyclohexanedimethanol.

12. A process for preparing a polyester film, which comprises:
(1) polymerizing a diol component and a dicarboxylic acid component to prepare a polyester resin;
(2) preparing a stretched film from the polyester resin; and
(3) heat-setting the stretched film,
wherein the heat shrinkage rate of the polyester film in the main shrinkage direction at 85°C is 50% or more, and when T1 is 80°C and T2 is 85°C, the average change in haze (ΔHₐᵥₑ) according to the following Equation 1 is 0.5 to 10: [Equation 1] ${ΔH}_{ave} \left(%/°C\right) = \left|{H}_{T 2}-{H}_{T 1}\right| / \left|T2-T1\right|$
in Equation 1, H_{T1} is the haze of the polyester film at the temperature of T1, and H_{T2} is the haze of the polyester film at the temperature of T2.
